# EUROPÄISCHE PATENTANMELDUNG

(11) **EP 3 017 802 A1**
(43) Veröffentlichungstag der Anmeldung: **11.05.2016**
(21) Anmeldenummer: 15174879.5
(22) Anmeldetag: 01.07.2015
(51) Int. Cl.: A61G 17/08, B29C 67/00, B33Y 80/00, B33Y 70/00

(54) **VERFAHREN ZUR HERSTELLUNG EINES BESTATTUNGSMITTELS ODER ZUMINDEST EINES TEILS DAVON**

(30) Priorität: 05.11.2014 DE 102014016278
(71) Anmelder: Einsiedel, Andreas, 91052 Erlangen (DE); Hofmann, Philipp, 90776 Fürth (DE)
(72) Erfinder: Einsiedel, Andreas, 91052 Erlangen (DE); Hofmann, Philipp, 90776 Fürth (DE)
(74) Vertreter: Hannke, Christian

(57) **Zusammenfassung**

Die Erfindung betrifft ein Verfahren zur Herstellung eines Bestattungsmittels oder zumindest eines Teils davon, wobei zunächst zumindest eine 3D-Druckvorrichtung bereitgestellt wird, wobei die 3D-Druckvorrichtung dazu eingerichtet und dazu vorgesehen ist, zumindest ein dreidimensionales Gebilde herzustellen. In einem nächsten Schritt wird zumindest ein Druckmaterial in einen Materialspeicher eingefüllt, wobei einzelne aufeinander aufbauende und in Druckrichtung übereinander gestapelte Druckschichten, welche jeweils mit dem Druckmaterial gebildet sind, gedruckt werden. Erfindungsgemäß handelt es sich bei dem Druckmaterial um ein umweltkompatibles Druckmaterial und die 3D-Druckvorrichtung bildet durch das übereinander stapeln der einzelnen Druckschichten das dreidimensionale Gebilde, welches insbesondere in Form eines dreidimensionalen Bestattungsmittels ausgebildet ist, aus.

## Beschreibung

Die vorliegende Erfindung betrifft ein Verfahren zur Herstellung eines Bestattungsmittels oder zumindest eines Teils davon, eine entsprechende Vorrichtung sowie eine entsprechende Verwendung gemäß den jeweiligen Oberbegriffen der Patentansprüche 1, 7 und 8.

Insbesondere betrifft die vorliegende Erfindung ein solches Verfahren, bei welchem zunächst zumindest eine 3D-Druckvorrichtung bereitgestellt wird, wobei die 3D-Druckvorrichtung dazu eingerichtet und dazu vorgesehen ist, zumindest ein dreidimensionales Gebilde herzustellen. In einem weiteren Schritt wird ein Druckmaterial in einen Materialspeicher eingefüllt, wobei anschließend einzelne, insbesondere aufeinander aufbauende und in Druckrichtung übereinander gestapelte Druckschichten, welche jeweils mit dem Druckmaterial gebildet sind, gedruckt werden.

Derartige 3D-Druckverfahren sind jedoch aus dem Stand der Technik wohlbekannt. Dabei sind zunächst 3D-Druckverfahren als ein Sammelbegriff zu verstehen, welcher für ein ganzes Bündel von Fertigungstechniken, die nach unterschiedlichen Prinzipien funktionieren, steht. Alle Verfahren bauen dabei dreidimensionale Objekte, indem sie Material in dünnen Schichten auftragen und verfestigen. Der Fachbegriff dafür ist additive Fertigung - in Abgrenzung zu subtraktiven Techniken wie Fräsen, Sägen, Bohren oder Wasserstrahlschneiden.

Beispielweise mittels sogenanntem Fused Deposition Modeling (FDM) lassen sich Materialien verarbeiten, die beim Erhitzen weich und formbar werden - thermoplastische Kunststoffe wie ABS oder PLA. Der Druckkopf von FDM-Maschinen besteht im Kern aus einer heißen Düse, in die das feste Rohmaterial gepresst wird und sich dadurch verflüssigt. Am anderen Ende der Düse tritt es als dünner und weicher Faden aus. Damit zeichnet der Druckkopf eine Schicht des gewünschten Objekts - die äußere Kontur als einfassende Linie, Flächen werden als Schraffuren angelegt. Ist die Schicht vollendet und das Material in der gewünschten Form erstarrt, rückt der Kopf um eine Schichtdicke vom Objekt ab und zeichnet die nächste Lage.

Mit anderen Worten sind daher solche "additive manufacturing"-Verfahren bereits wohl bekannt.

Nach dem Stand der Technik war es bisher zudem bestenfalls möglich Urnen mit Bio-Druckmaterialien (= umweltkompatibles Material) zu fertigen, welche mit konventionellen Methoden, beispielsweise im Spritzgussverfahren, gefertigt wurden. Mit anderen Worten bietet der bekannte Stand der Technik derzeit keine Möglichkeiten an die Vorteile eines 3D-Druckverfahrens auf die Fertigung von Urnen, welche zum Beispiel mit Bio-Druckmaterialien gefertigt wurden, anzuwenden.

Ausgehend hiervon ist es eine Aufgabe der vorliegenden Erfindung ein Verfahren anzubieten, welches es ermöglicht mittels eines 3D-Druckverfahrens in besonders einfacher, kostengünstiger und umweltfreundlicher Art und Weise ein Bestattungsmittel mit einem umweltkompatiblen Druckmaterial zu fertigen. Dies ermöglicht daher die Paarung der Vorteile eines 3D-Druckverfahrens mit den Vorteilen eines umweltfreundlichen Druckmaterials im Bereich des Bestattungswesens zu vereinigen.

Um daher diese Aufgabe zu lösen, macht die vorliegende Erfindung unter anderem von der Idee Gebrauch, dass es sich bei dem Druckmaterial um ein umweltkompatibles Druckmaterial handelt und die 3D-Druckvorrichtung durch das übereinander stapeln der einzelnen Druckschichten das dreidimensionale Gebilde, welches insbesondere in Form eines dreidimensionalen Bestattungsmittels ausgebildet ist, bildet.

"Umweltkompatibel" heißt in diesem Zusammenhang, dass das Material (auch Druckmaterial) frei von umweltschädigenden Stoffen, wie zum Beispiel Erdöl, ist. Dabei kann es sich bei dem Material auch um einen Kunststoff handeln. Insbesondere weist das Druckmaterial eine vollständige Verträglichkeit mit Erd-Boden, Organismen und Wasser am Bestattungsort auf. Insofern kann es sich bei umweltkompatiblen Materialien auch um Bio-kompatible Materialien handeln.

Gemäß zumindest einer Ausführungsform umfasst das hier beschriebene Verfahren einen ersten Schritt, bei welchem zunächst zumindest eine 3D-Druckvorrichtung bereitgestellt wird, wobei die 3D-Druckvorrichtung dazu eingerichtet und dazu vorgesehen ist zumindest ein dreidimensionales Gebilde herzustellen. In einem weiteren Schritt wird ein Druckmaterial in einen Materialspeicher eingefüllt, wobei anschließend einzelne, insbesondere aufeinander aufbauende und in Druckrichtung übereinander gestapelte, Druckschichten, welche jeweils mit dem Druckmaterial gebildet sind, gedruckt werden. Erfindungsgemäß handelt es sich bei dem Druckmaterial um ein umweltkompatibles Druckmaterial, wobei die 3D-Druckvorrichtung durch das übereinander stapeln der einzelnen Druckschichten das dreidimensionale Gebilde, welches insbesondere in Form eines dreidimensionalen Bestattungsmittels ausgebildet ist, bildet.

Wie nun nicht abschließend unten gezeigt, kommen folgende 3D-Printechnologien in Frage:

### 1. Das FDM-Verfahren (Fused Deposition Modeling)

### Alternativbezeichnungen: Fused Filament Fabrication (FFF), Fused Layer Modeling (FLM)

Das Verfahren bezeichnet schichtweises Auftragen (Extrusion) eines Materials durch eine heiße Düse. Das Verbrauchsmaterial befindet sich in Form eines langen Drahts (sog. Filament) auf einer Rolle und wird durch die Fördereinheit in einen Druckkopf geschoben, dort eingeschmolzen und auf einem Druckbett ausgebracht. Druckkopf und/oder Druckbett sind dabei in 3 Richtungen beweglich. So können Kunststoffschichten schrittweise aufeinander aufgebracht werden.

### 2. Das SLS Verfahren (Selektives Lasersintern)

Im Unterschied zum Sinterverfahren, bei dem Stoffe in Pulverform unter Hitzeeinwirkung miteinander verbunden werden, geschieht dies beim SLS-Verfahren selektiv durch einen Laser (alternativ auch Elektronenstrahl oder Infrarotstrahl). Es wird also nur ein bestimmter Teil des Pulvers miteinander verschmolzen.

Dazu wird stets eine dünne Pulverschicht von der Beschichtungseinheit auf dem Druckbett ausgebracht. Der Laser (oder andere Energiequelle) wird nun punktgenau auf einzelne Stellen der Pulverschicht ausgerichtet, um die erste Schicht der Druckdaten auszubilden. Hierbei wird das Pulver an- oder aufgeschmolzen und verfestigt sich anschließend wieder durch geringfügiges Abkühlen. Das nicht aufgeschmolzene Pulver bleibt um die gesinterten Bereiche herum liegen und dient als Stützmaterial. Nachdem eine Schicht verfestigt ist, senkt sich das Druckbett um den Bruchteil eines Millimeters ab. Die Beschichtungseinheit fährt nun über das Druckbett und bringt die nächste Pulverschicht aus. Anschließend wird die zweite Schicht der Druckdaten durch den Laser (oder andere Energiequelle) gesintert. So entsteht schichtweise ein dreidimensionales Objekt.

### 3. Three-Dimensional Printing (3DP)

Das 3DP-Verfahren funktioniert sehr ähnlich wie das selektive Lasersintern, doch anstelle einer gerichteten Energiequelle verfährt ein Druckkopf über das Pulver. Dieser gibt winzige Tröpfchen von Bindemittel auf die zugrunde liegende Pulverschichten ab, die so miteinander verbunden werden. Ansonsten ist dieses Verfahren dem SLS-Verfahren gleich.

### 4. Stereolithographie (SLA)

Anstelle eines Kunststoffdrahts oder Druckmaterials in Pulverform kommen beim Stereolithographie-Verfahren flüssige Harze, sog. Photopolymere, zum Einsatz. Sie werden schichtweise durch UV-Strahlung verhärtet und erzeugen so dreidimensionale Objekte. Dafür wird die Bauplattform im Harzbecken schrittweise abgesenkt. Es gibt auch Varianten (sog. Polyjet-Verfahren) ohne ein ganzes Becken mit flüssigem Harz. Dafür wird ein Epoxydharz tröpfchenweise aus einer Düse aufgebracht und durch einen UV-Laser sofort ausgehärtet.

### 5. Laminated Object Manufacturing (LOM)

### Alternativbezeichnung: Layer Laminated Manufacturing (LLM)

Das Verfahren basiert weder auf chemischen Reaktionen, noch auf einem thermischen Prozess. Es wird dabei mit einem trennenden Werkzeug (z.B. einem Messer oder Kohlendioxidlaser) eine Folie oder Platte (z.B. Papier) an der Kontur geschnitten und schichtweise aufeinander geklebt. So entsteht durch Absenken der Bauplattform ein Schichtobjekt aus geklebten, übereinanderliegenden Folien.

Gemäß zumindest einer Ausführungsform ist das Druckmaterial biologisch abbaubar. "Biologisch abbaubar" bezeichnet jedenfalls das Vermögen organischer Chemikalien zum biologischen Abbau, also ihrer Zersetzung durch Lebewesen (insbesondere Saprobionten) bzw. deren Enzyme. Im Idealfall verläuft dieser chemische Metabolismus vollständig bis zur Mineralisierung, so dass die organische Verbindung bis hin zu anorganischen Stoffen wie Kohlendioxid, Sauerstoff und Ammoniak zerlegt wird, der Abbau kann aber auch bei abbaustabilen Transformationsprodukten stehen bleiben.

Gemäß zumindest einer Ausführungsform ist das Druckmaterial recyclebar. Der Begriff "Recycling" ist etwa definiert als "jedes Venrvertungsverfahren, durch das Abfälle zu Erzeugnissen, Materialien oder Stoffen entweder für den ursprünglichen Zweck oder für andere Zwecke aufbereitet werden". Es schließt die Aufbereitung organischer Materialien ein, aber nicht die energetische Verwertung und die Aufbereitung zu Materialien, die für die Verwendung als Brennstoff oder zur Verfüllung bestimmt sind" (§ 3 Abs. 25 deutsches Kreislaufwirtschaftsgesetz).

Gemäß zumindest einer Ausführungsform ist das Druckmaterial kompostierbar. "Kompostierung" (auch Rotte) bezeichnet den biologischen Prozess des Nährstoffkreislaufs, bei dem leicht verwertbares organisches Material unter Einfluss von Luftsauerstoff (aerob) von Bakterien und Pilzen (heterotrophen Mikroorganismen) abgebaut wird. Dabei werden neben Kohlendioxid auch wasserlösliche Mineralstoffe freigesetzt wie beispielsweise Nitrate, Ammoniumsalze, Phosphate, Kalium- und Magnesiumverbindungen, die als Dünger wirken. Ein Teil der bei diesem Abbau entstehenden Zwischenprodukte wird zu Humus umgewandelt.

Beispiele von grundsätzlich geeigneten Materialien sind:
- PLA (Polylactide): -recyclebar und biologisch abbaubar-

PLA (Polylactide) ist ein Thermoplast, welches aus der Stärke von Pflanzen wie z.B. Mais, Zuckerrohr, Getreide oder Zuckerrüben gewonnen wird. Hergestellt aus biologischen Ressourcen ist dieses Thermoplast unter den richtigen Voraussetzungen (industrielle Kompostierung bei erhöhter Temperatur und spezieller Umgebung) biologisch abbaubar, für Wasser und Boden toxikologisch unbedenklich.
- BioFila® (Lignin): -biologisch abbaubar und kompostierbar-

BioFila® wird aus nachwachsenden Rohstoffen (Lignin) gewonnen und ist zudem biologisch abbaubar. Insbesondere kann sich das Material in der Erde schnell zersetzen; insbesondere auch schneller als in den nach kommunalen Friedhofssatzungen festgelegten Ruhezeiten.
- Algoblend® (Algen): -Naturstoff, kompostierbar mit Düngewirkung-
- Zucker: -100% Naturstoff, kompostierbar-

Gemäß zumindest einer Ausführungsform ist das Bestattungsmittel in Form einer Bestattungsurne oder zumindest als ein Teil davon ausgebildet. Beispielsweise sind ein Urnendeckel und/oder auch der Urnengrundkörper mit einem biologisch abbaubaren Material gebildet.

Gemäß zumindest einer Ausführungsform umfasst die 3D-Druckvorrichtung zumindest ein Druckelement, welches nur dazu geeignet und/oder nur dazu vorgesehen ist, ein Bestattungsmittel in Form einer Bestattungsurne oder einen Teil davon herzustellen. "Nur dazu geeignet", kann in diesem Zusammenhang heißen, das die Druckvorrichtung ein solches Dosierelement und/oder Druckelement umfasst, mittels dem, insbesondere mittels eines Sensors, die Ausgestaltung einer Bestattungsurne, exakt, vorgebbar eingestellt werden kann. Mit anderen Worten ist ein solches Dosierelement nicht zur Anwendung auf anderen Gebieten, beispielweise zum Drucken von Torten oder Gartenzwergen, geeignet und/oder eingerichtet.

Zur speziellen Herstellung von Bestattungsurnen können daher das Dosierelement und insbesondere dessen Sensor nur auf die Anforderungen an die Herstellung der Urnen angepasst sein. Dies kann eine spezielle Anpassung an die Materialmenge und/oder Beschaffenheit zur Herstellung der Bestattungsurne umfassen.

Alternativ hierzu kann jedoch auch ein wie eingangs beschriebener, aus dem Stand der Technik bekannter 3D-Drucker zur Ausbildung der Bestattungsurnen verwendet werden.

Des Weiteren wird hiermit auch eine Vorrichtung zur Herstellung eines Bestattungsmittels oder zumindest eines Teils davon beansprucht. Insbesondere kann mittels der nun beanspruchten Vorrichtung ein wie obig beschriebenen Verfahren durchgeführt werden. Das heißt, dass alle für das hier beschriebenen Verfahren offenbarten Merkmale auch für die hier beschriebene Vorrichtung offenbart sind und umgekehrt.

Gemäß zumindest einer Ausführungsform umfasst die Vorrichtung zur Herstellung eines Bestattungsmittels oder zumindest eines Teils davon zumindest eine 3D-Druckvorrichtung, wobei die 3D-Druckvorrichtung dazu eingerichtet und dazu vorgesehen ist zumindest ein dreidimensionales Gebilde, insbesondere in Form eines dreidimensionalen Bestattungsmittels, durch übereinander stapeln von Druckschichten, herzustellen. Zudem umfasst die 3D-Druckvorrichtung zumindest einen Materialspeicher, in welchem zumindest ein Druckmaterial einfüllbar ist, wobei die Druckschichten mit dem Druckmaterial gebildet sind und wobei erfindungsgemäß es sich bei dem Druckmaterial um ein umwelt-kompatibles Druckmaterial handelt und mittels der 3D-Druckvorrichtung durch das Übereinanderstapeln der einzelnen Druckschichten das dreidimensionale Gebilde, insbesondere in Form eines dreidimensionalen Bestattungsmittels, ausbildbar ist.

Dabei weist die hier beschriebene Vorrichtung die gleichen Vorteile und Ausgestaltungen auf, wie das hier beschriebene Verfahren und umgekehrt.

Im Folgenden wird das hier beschriebene Verfahren und die hier beschriebene Vorrichtung anhand eines Ausführungsbeispiels näher erläutert.

In der Figur 1 ist anhand einer schematischen Draufsicht ein Ausführungsbeispiel einer hier beschriebenen Vorrichtung näher erläutert.

Die Figuren 2A bis 2E zeigen die verschiedenen in dieser Patentanmeldung vorgestellten 3D-Printechnologien:
In den Ausführungsbeispielen und der Figur sind gleiche oder gleichwirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

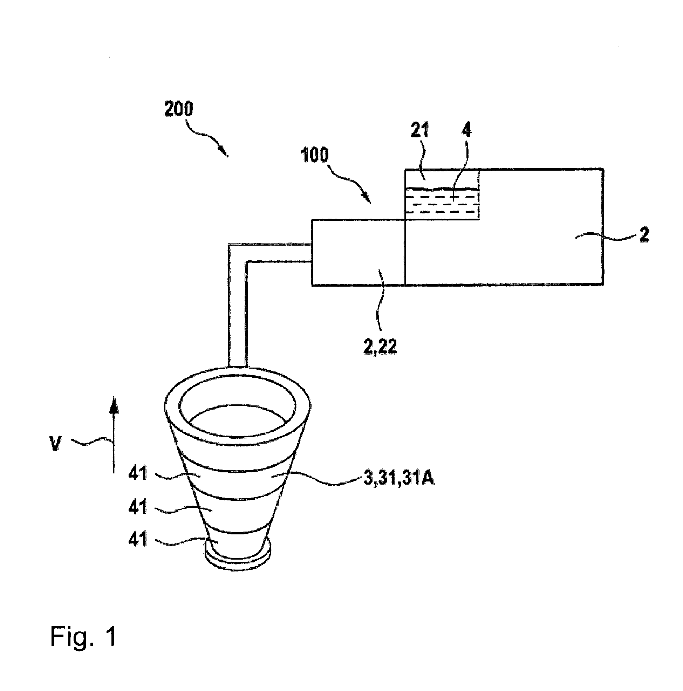

In der Figur 1 ist daher zunächst eine Vorrichtung 200 gezeigt, mittels der das hier beschriebene Verfahren 100 zur Herstellung einer Bestattungsurne 31A durchgeführt wird. Dazu umfasst das Verfahren 100 zur Herstellung einer Bestattungsurne 31 A zunächst einen ersten Schritt, welcher eine Bereitstellung einer 3D-Druckvorrichtung 2 umfasst, wobei die 3D-Druckvorrichtung 2 dazu eingerichtet und dazu vorgesehen ist, zumindest ein dreidimensionales Gebilde 3 herzustellen. In einem weiteren Schritt wird ein Druckmaterial 4 in einen Materialspeicher 21 der 3D-Druckvorrichtung 2 eingefüllt, wobei anschließend ein Drucken von einzelnen aufeinander aufbauenden und in Druckrichtung V übereinander gestapelten Druckschichten 41, welche jeweils mit dem Druckmaterial 4 gebildet sind, durchgeführt wird.

Entscheidend bei der hier beschriebenen Vorrichtung 200 und dem hier beschriebenen Verfahren 100 ist, dass es sich bei dem Druckmaterial 4 um ein umweltkompatibles Druckmaterial 4 handelt und die 3D-Druckvorrichtung 2 durch das Übereinanderstapeln der einzelnen Druckschichten 41 das dreidimensionale Gebilde 3, welches insbesondere in Form eines dreidimensionalen Bestattungsmittels 31 ausgebildet ist, bildet.

Dabei ist das Bestattungsmittel 31 in Form einer Bestattungsurne 31A ausgebildet. Zudem umfasst die 3D-Druckvorrichtung 2 zumindest ein Druckelement 22 mittels dem die Bestattungsurne 31A, wie in der Figur 1 gezeigt, hergestellt wird.

Erstmals ist es daher möglich, Bestattungsurnen mit Bio-Druckmaterialien (= umweltkompatible Materialien) zu fertigen. Mit anderen Worten bietet die vorliegende Anmeldung eine Möglichkeit an, die Vorteile eines 3D-Druckverfahrens auf die Fertigung von Bestattungsurnen zu übertragen, und dies dazu noch mit einem umweltkompatiblen Material zu tun, um die einzelnen Bestattungsverordnungen zu erfüllen.

Wie nun nicht abschließend unten gezeigt, kommen folgende 3D-Printechnologien in Frage:

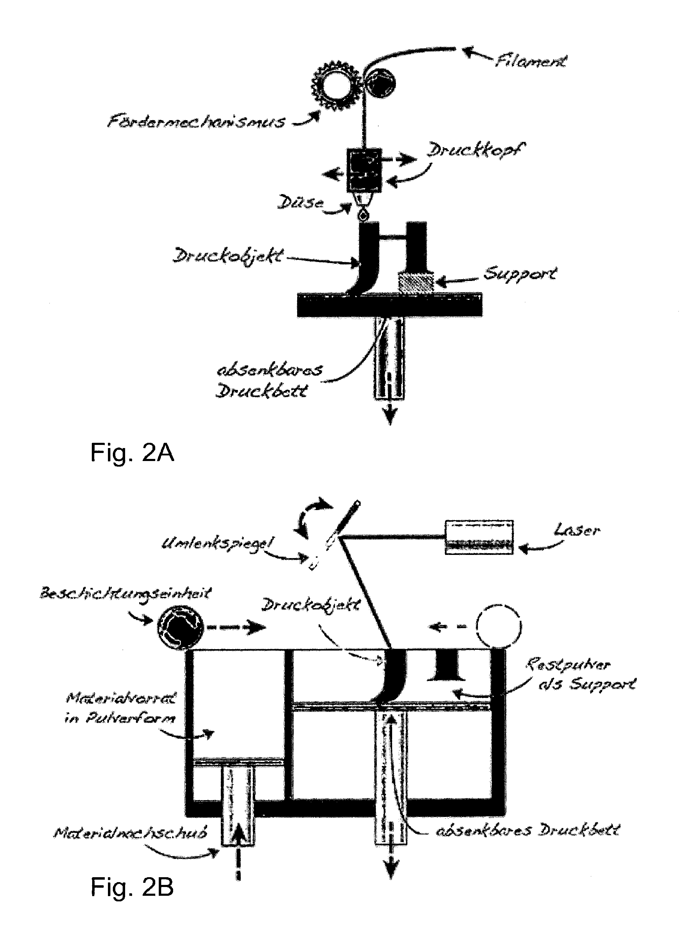

### 1. Das FDM-Verfahren (Fused Deposition Modeling, siehe Figur 2A)

### Alternativbezeichnungen: Fused Filament Fabrication (FFF), Fused Layer Modeling (FLM)

Das Verfahren bezeichnet schichtweises Auftragen (Extrusion) eines Materials durch eine heiße Düse. Das Verbrauchsmaterial befindet sich in Form eines langen Drahts (sog. Filament) auf einer Rolle und wird durch die Fördereinheit in einen Druckkopf geschoben, dort eingeschmolzen und auf einem Druckbett ausgebracht. Druckkopf und/oder Druckbett sind dabei in 3 Richtungen beweglich. So können Kunststoffschichten schrittweise aufeinander aufgebracht werden.

### 2. Das SLS Verfahren (Selektives Lasersintern, siehe Figur 2B)

Im Unterschied zum Sinterverfahren, bei dem Stoffe in Pulverform unter Hitzeeinwirkung miteinander verbunden werden, geschieht dies beim SLS-Verfahren selektiv durch einen Laser (alternativ auch Elektronenstrahl oder Infrarotstrahl). Es wird also nur ein bestimmter Teil des Pulvers miteinander verschmolzen.

Dazu wird stets eine dünne Pulverschicht von der Beschichtungseinheit auf dem Druckbett ausgebracht. Der Laser (oder andere Energiequelle) wird nun punktgenau auf einzelne Stellen der Pulverschicht ausgerichtet, um die erste Schicht der Druckdaten auszubilden. Hierbei wird das Pulver an- oder aufgeschmolzen und verfestigt sich anschließend wieder durch geringfügiges Abkühlen. Das nicht aufgeschmolzene Pulver bleibt um die gesinterten Bereiche herum liegen und dient als Stützmaterial. Nachdem eine Schicht verfestigt ist, senkt sich das Druckbett um den Bruchteil eines Millimeters ab. Die Beschichtungseinheit fährt nun über das Druckbett und bringt die nächste Pulverschicht aus. Anschließend wird die zweite Schicht der Druckdaten durch den Laser (oder andere Energiequelle) gesintert. So entsteht schichtweise ein dreidimensionales Objekt.

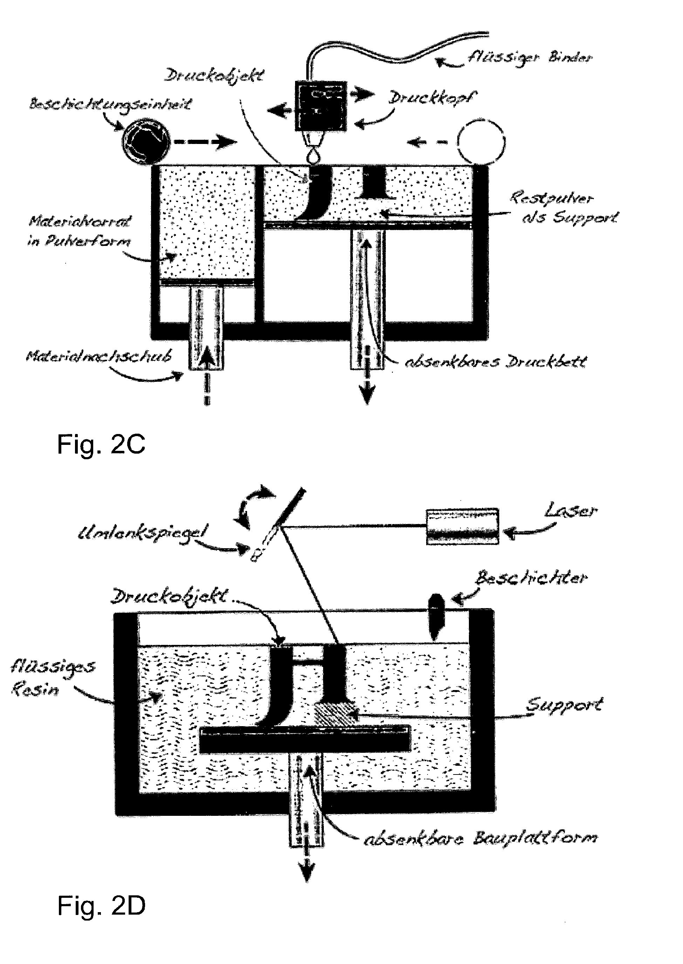

### 3. Three-Dimensional Printing (3DP, siehe Figur 2C)

Das 3DP-Verfahren funktioniert sehr ähnlich wie das selektive Lasersintern, doch anstelle einer gerichteten Energiequelle verfährt ein Druckkopf über das Pulver. Dieser gibt winzige Tröpfchen von Bindemittel auf die zugrunde liegende Pulverschichten ab, die so miteinander verbunden werden. Ansonsten ist dieses Verfahren dem SLS-Verfahren gleich.

### 4. Stereolithographie (SLA, siehe Figur 2D)

Anstelle eines Kunststoffdrahts oder Druckmaterials in Pulverform kommen beim Stereolithographie-Verfahren flüssige Harze, sog. Photopolymere, zum Einsatz. Sie werden schichtweise durch UV-Strahlung verhärtet und erzeugen so dreidimensionale Objekte. Dafür wird die Bauplattform im Harzbecken schrittweise abgesenkt. Es gibt auch Varianten (sog. Polyjet-Verfahren) ohne ein ganzes Becken mit flüssigem Harz. Dafür wird ein Epoxydharz tröpfchenweise aus einer Düse aufgebracht und durch einen UV-Laser sofort ausgehärtet.

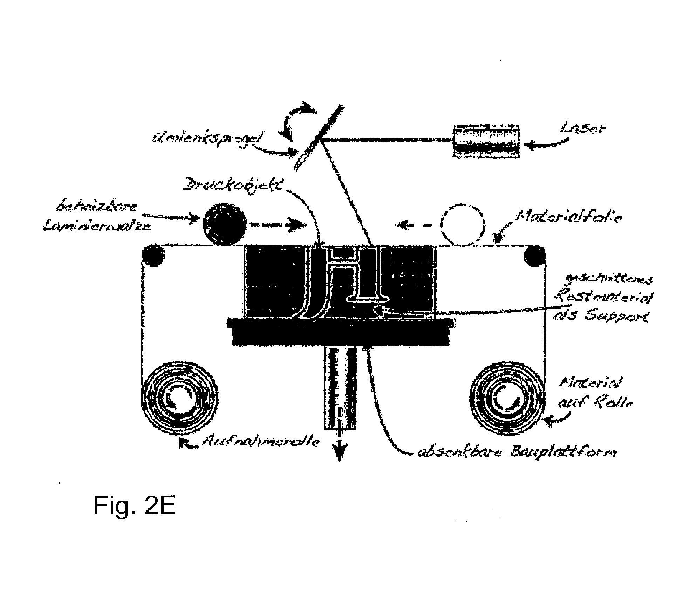

### 5. Laminated Object Manufacturing (LOM, siehe Figur 2E)

### Alternativbezeichnung: Layer Laminated Manufacturing (LLM)

Das Verfahren basiert weder auf chemischen Reaktionen, noch auf einem thermischen Prozess. Es wird dabei mit einem trennenden Werkzeug (z.B. einem Messer oder Kohlendioxidlaser) eine Folie oder Platte (z.B. Papier) an der Kontur geschnitten und schichtweise aufeinander geklebt. So entsteht durch Absenken der Bauplattform ein Schichtobjekt aus geklebten, übereinanderliegenden Folien.

Die Erfindung ist nicht durch die Beschreibung anhand des Ausführungsbeispiels beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder dem Ausführungsbeispiel angegeben ist.

### Bezugszeichenliste

- 100: Verfahren
- 200: Vorrichtung
- 2: 3D-Druckvorrichtung
- 21: Materialspeicher
- 22: Druckelement
- 3: dreidimensionales Gebilde
- 31: dreidimensionales Bestattungsmittel
- 31A: Bestattungsurne
- 4: umweltkompatibles Druckmaterial
- 41: Druckschichten
- V: Druckrichtung

## Patentansprüche

1. Verfahren (100) zur Herstellung eines Bestattungsmittels (31) oder zumindest eines Teils davon, wobei
- zunächst zumindest eine 3D-Druckvorrichtung (2) bereitgestellt wird, wobei die 3D-Druckvorrichtung (2) dazu eingerichtet und dazu vorgesehen ist zumindest ein dreidimensionales Gebilde (3) herzustellen,
- Einfüllen zumindest eines Druckmaterials (4) in einen Materialspeicher (21),
- Drucken von einzelnen aufeinander aufbauenden und insbesondere in Druckrichtung (V) übereinander gestapelten Druckschichten (41), welche jeweils mit dem Druckmaterial (4) gebildet sind,
**dadurch gekennzeichnet, dass**
es sich bei dem Druckmaterial (4) um ein umweltkompatibles Druckmaterial (4) handelt und die 3D-Druckvorrichtung (2) durch das Übereinanderstapeln der einzelnen Druckschichten (41) das dreidimensionale Gebilde (3), welches insbesondere in Form eines dreidimensionalen Bestattungsmittels (31) ausgebildet ist, bildet.

2. Verfahren (100) nach Anspruch 1,
**dadurch gekennzeichnet, dass**
das Druckmaterial (4) biologisch abbaubar ist.

3. Verfahren (100) nach zumindest einem der vorhergehenden Ansprüche,
**dadurch gekennzeichnet, dass**
das Druckmaterial (4) recyclebar ist.

4. Verfahren (100) nach zumindest einem der vorhergehenden Ansprüche,
**dadurch gekennzeichnet, dass**
das Druckmaterial (4) kompostierbar ist.

5. Verfahren (100) nach zumindest einem der vorhergehenden Ansprüche,
**dadurch gekennzeichnet, dass**
das Bestattungsmittel (31) in Form einer Bestattungsurne (31A) oder zumindest als ein Teil davon ausgebildet ist.

6. Verfahren (100) nach dem vorhergehenden Anspruch,
**dadurch gekennzeichnet, dass**
die 3D-Druckvorrichtung (2) zumindest ein Druckelement (22) umfasst, welches nur dazu geeignet und/oder nur dazu vorgesehen ist, ein Bestattungsmittel (31) in Form einer Bestattungsurne (31A) oder einen Teil davon herzustellen.

7. Vorrichtung (200) zur Herstellung eines Bestattungsmittels (31) oder zumindest eines Teils davon, umfassend
- zumindest eine 3D-Druckvorrichtung (2), wobei die 3D-Druckvorrichtung (2) dazu eingerichtet und dazu vorgesehen ist, zumindest ein dreidimensionales Gebilde (3), insbesondere in Form eines dreidimensionalen Bestattungsmittels (31), durch Übereinanderstapeln von Druckschichten (41), herzustellen,
- zumindest einen Materialspeicher (21), in welchem zumindest ein Druckmaterial (4) einfüllbar ist, wobei die Druckschichten (41) mit dem Druckmaterial (4) gebildet sind,
**dadurch gekennzeichnet, dass**
es sich bei dem Druckmaterial (4) um ein umweltkompatibles Druckmaterial (4) handelt und mittels der 3D-Druckvorrichtung (2) durch das Übereinanderstapeln der einzelnen Druckschichten (41) das dreidimensionale Gebilde (3), insbesondere in Form eines dreidimensionalen Bestattungsmittels (31), ausbildbar ist.

8. Verwendung des Verfahrens (100) nach Anspruch 1 und/oder der Vorrichtung (2) nach Anspruch 7 zur Herstellung von Bestattungsmitteln oder zumindest eines Teils davon, insbesondere von Bestattungsurnen (31 A) oder zumindest eines Teils davon.
